# EUROPÄISCHE PATENTSCHRIFT

(11) **EP 1 192 587 B1**
(45) Veröffentlichungstag und Bekanntmachung des Hinweises auf die Patenterteilung: **28.05.2003**
(21) Anmeldenummer: 00951205.4
(22) Anmeldetag: 03.06.2000
(51) Int. Cl.: G06F 3/033, G06K 11/18

(54) **BEDIENELEMENT**
OPERATING ELEMENT
ELEMENT DE COMMANDE

(30) Priorität: 11.06.1999 DE 19926596
(43) Veröffentlichungstag der Anmeldung: 03.04.2002
(73) Patentinhaber: ROBERT BOSCH GMBH, 70442 Stuttgart (DE)
(72) Erfinder: ESCHLER, Johannes, D-71254 Ditzingen (DE); SCHIRMER, Jürgen, D-69124 Heidelberg (DE)
(86) Internationale Anmeldenummer: DE0001813
(87) Internationale Veröffentlichungsnummer: WO00077603

(56) Entgegenhaltungen:
- WO-A-97/25657
- DE-A- 3 503 667
- DE-U- 8 419 546
- "MAN-MACHINE INTERFACE DEVICE FOR 3-D POLAR COORDINATES" IBM TECHNICAL DISCLOSURE BULLETIN,US,IBM CORP. NEW YORK, Bd. 32, Nr. 8A, 1990, Seiten 407-408, XP000082856 ISSN: 0018-8689
- "MOUSE BALL-ACTUATING DEVICE WITH FORCE AND TACTILE FEEDBACK" IBM TECHNICAL DISCLOSURE BULLETIN,US,IBM CORP. NEW YORK, Bd. 32, Nr. 9B, 1. Februar 1990 (1990-02-01), Seiten 230-235, XP000082319 ISSN: 0018-8689
- "INTERACTIVE TRACKBALL RELIES ON FORCE-FEEDBACK SENSING" ELECTRONIC DESIGN,US,PENTON PUBLISHING, CLEVELAND, OH, Bd. 40, Nr. 9, 1. Mai 1992 (1992-05-01), Seite 32,36 XP000334855 ISSN: 0013-4872

## Beschreibung

### Stand der Technik

Die Erfindung geht von einem Bedienelement nach der Gattung des unabhängigen Patentanspruchs aus.

Für Personalcomputer sind Bedienvorrichtungen bekannt, die ein kugelförmiges Bedienelement, beispielsweise in Form einer sogenannten Computermaus oder eines Trackballs, letztere vorzugsweise bei tragbaren Personalcomputern, aufweisen. Diese werden in der Regel für zweidimensionale Eingaben, beispielsweise zur Steuerung der Position eines Zeigers innerhalb eines auf einem Computerbildschirm dargestellten zweidimensionalen Menüs, verwendet Das kugelförmige Bedienelement in einer solchen bekannten Bedienvorrichtung ist dabei gewöhnlich so gelagert, daß eine translatorische Bewegung der Kugel innerhalb des sie umgebenden Gehäuses im wesentlichen unterbunden ist.

Weiterhin ist aus der WO-A-98/54670 eine Bedienvorrichtung mit einem kugelförmigen Bedienelement in Form eines rastbaren Trackballs bekannt, wobei das dort beschriebene kugelförmige Bedienelement an seiner Oberfläche muldenförmige Vertiefungen aufweist, in die Rastelemente einrasten. Dies ermöglicht für den Bediener eine verbesserte haptische Rückmeldung betreffend das Maß der Verstellung des mit dem kugelförmigen Bedienelements verstellten Parameters. Eine visuelle Kontrolle des zu verstellenden Parameters ist damit unter Umständen verzichtbar. Damit eignet sich die beschriebene Vorrichtung besonders für einen Einsatz in solchen Geräten, bei denen eine visuelle Kontrolle der zu verstellenden Parameter nicht möglich oder erschwert ist.

Weiter sind eindimensionale Bedienelemente, beispielsweise in Form von Drehpotentiometern oder -inkrementengebern bekannt, die um eine Drehachse drehbar sind und eine Verstellung eines Parameters erlauben. Einem solchen Bedienelement sind beispielsweise durch Funktionstasten verschiedene zu verstellende Parameter zuordenbar.

Eine ebenfalls bekannte Weiterbildung solcher eindimensionaler Bedienelemente stellen eindimensionale Drehgeber mit einer durch eine Rastfeder und entsprechende Rastmarken fest vorgegebenen Rasterung dar.

IBM Technical Disclosure Bulletin, Bd. 32, Nr. 8A, Januar 1990, Seiten 407/8 offenbart ein "Man-Machine Interface Device for 3-D Polar Coordinates", also eine Anordnung zur Eingabe dreidimensionaler Polarkoordinaten. Eine erste Kugel ist drehbar in einer zweiten, geschlitzten Hohlkugel gelagert, wobei ein Zugriff auf die erste Kugel mittels eines durch den Schlitz der Hohlkugel herausragenden Zapfens möglich ist. Die geschlitzte Hohlkugel ist auf einem Befestigungssockel montiert und um eine durch Kugel und Sockel, senkrecht zur Befestigungsebene verlaufende Achse drehbar, während die Drehbarkeit der in ihr gelagerten Kugel durch den durch den Schlitz der Hohlkugel herausragenden Zapfen vorgegeben ist. Damit lassen sich die Winkelstellung sowohl der Hohl- als auch der in ihr gelagerten ersten Kugel durch Zugriff auf den Zapfen gemeinsam verstellen.

DE-A-35 03 667 offenbar ein Eingabegerät zum Konstruieren am Bildschirm mit zwei um zueinander senkrecht stehende Drehachsen drehbaren Rändelrädern, die wiederum in einer um eine Achse senkrecht zu den Drehachsen der Rändelräder drehbaren Scheibe gelagert sind.

DE-U- 84 19 546.0 offenbart eine Cursorsteuerung für einen Computerbildschirm mit zwei um senkrecht zueinander stehende Drehachsen drehbar gelagerten Walzen. Die Walzen erzeugen z. B. durch mechanische Betätigung von elektrischen Kontakten Inkremente, die durch eine nachgeschaltete Auswertung weiterverarbeitet werden.

### Vorteile der Erfindung

Das erfindungsgemäße Bedienelement mit den Merkmalen des unabhängigen Patentanspruchs, nämlich ein Bedienelement mit einem ersten Stellelement, das um eine erste Achse drehbar ist,
mit einem zweiten Stellelement, das um eine Symmetrieachse rotationssymmetrisch und um eine zweite Achse, die mit der ersten Achse nicht zusammenfällt, drehbar ist, wobei das zweite Stellelement das erste Stellelement teilweise umfaßt und bei dem die erste Achse von einer Stellung des zweiten Stellelements unabhängig ist, ermöglicht in vorteilhafter Weise die Verstellung zweier Parameter unabhängig voneinander mittels eines Bedienelements. Dies ermöglicht beispielsweise die Steuerung eines Zeigers in einer zweidimensionalen Auswahlliste, wobei im Gegensatz zu einem einzigen kugelförmigen Bedienelement als zweidimensionalem Bedienelement ein versehentliches Verstellen in einer nicht gewünschten Dimension, beispielsweise in Folge von Erschütterungen oder einer fehlenden optischen Rückmeldung dadurch verhindert wird, daß jedem Stellelement des Bedienelements jeweils nur eine Dimension zugeordnet ist.

Die rotationssymmetrische Ausbildung des zweiten Stellelements und die Anordnung der mindestens zwei Stellelemente derart, daß das zweite Stellelement das erste Stellelement zumindest teilweise umschließt, hat den besonderen Vorteil, daß der Benutzer auch ohne direkten Sichtkontakt zum Bedienelement ausgehend von der Kenntnis der Lage eines ersten Stellelements des Bedienelements durch geringfügige translatorische Bewegung der bedienenden Hand das oder die weiteren Stellelemente ohne aufwendige Suche vorfindet.

Von besonderem Vorteil ist auch eine Strukturierung der Oberfläche mindestens eines der Stellelemente, da damit zum einen die Griffigkeit des jeweiligen Stellelements erhöht werden kann, zum anderen dem Benutzer auf haptischem Wege ein Eindruck über die möglichen rotatorischen Freiheitsgrade des jeweiligen Stellelements vermittelbar ist.

Weiterhin von Vorteil ist das Vorsehen von Mitteln zur Beeinflussung des zur Drehung mindestens eines der Stellelemente des Bedienelements erforderlichen Drehmoments. Damit kann dem Benutzer beispielsweise bei der Verstellung eines Parameters mittels des Bedienelements eine haptische ückmeldung über den aktuellen Wert des zu verstellenden Parameters oder auch darüber, daß er an einem Ende eines Wertebereichs des zu verstellenden Parameters angelangt ist, vermittelt werden.

Letzteres, also die haptische Vermittlung eines Eindrucks über das Maß einer Parameterstellung ist insbesondere dann möglich, wenn mittels der Mittel zur Beeinflussung des zur Drehung mindestens eines Stellelements erforderlichen Drehmoments ein Drehmomentverlauf erzeugt wird, der ein Rasten des Stellelements bewirkt.

Weiter ist es von Vorteil, daß die Abstände der Rastmarken bei einem erfindungsgemäßen Bedienelement im Gegensatz zu der eingangs erwähnten mechanischen Lösung nicht fest, sondern beispielsweise in Abhängigkeit des Kontextes veränderlich sind. So könnte zum Beispiel bei Einsatz des erfindungsgemäßen Bedienelements als Lautstärkesteller für ein Autoradio eine hohe Anzahl von Rastmarken auf eine Drehung des Bedienelements verteilt werden, was ermöglicht, den gesamten Lautstärkebereich mit einer einzigen Drehung bei genügend hoher Auflösung abzudecken. Demgegenüber könnten bei Einsatz des Bedienelements beispielsweise als Quellenumschalter für ein Autoradio nur wenige Rastmarken, die jeweils einer Audioquelle zugeordnet sind, auf eine Umdrehung des Bedienelements verteilt werden, so daß sich für den Benutzer eine beispielsweise von Heimaudioanlagen gewohnte Haptik ergibt.

### Zeichnungen

Ausführungsbeispiele der Erfindung sind in den Figuren dargestellt und werden nachfolgend näher erläutert.

Es zeigen
Figur 1 ein Blockschaltbild einer Bedienvorrichtung mit einem erfindungsgemäßen Bedienelement,
Figur 1B eine alternative Ausführungsform des Bedienelements,
Figur 2A eine Codierscheibe als Teil eines Wandlers,
Figur 2B den zeitlichen Verlauf von mittels der Wandler erzeugten impulsförmigen Signalen als Folge einer Drehung eines der Stellelemente des Bedienelements und
Figur 3 beispielhaft eine Auswahlliste mit zugehörigen Drehmomentverläufen, die den Stellelementen des Bedienelements aufgeprägt sind.

### Beschreibung der Ausführungsbeispiele

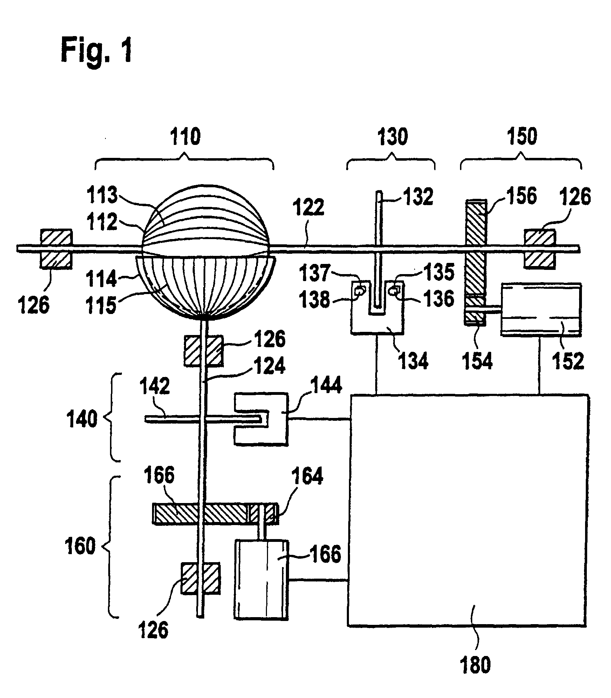

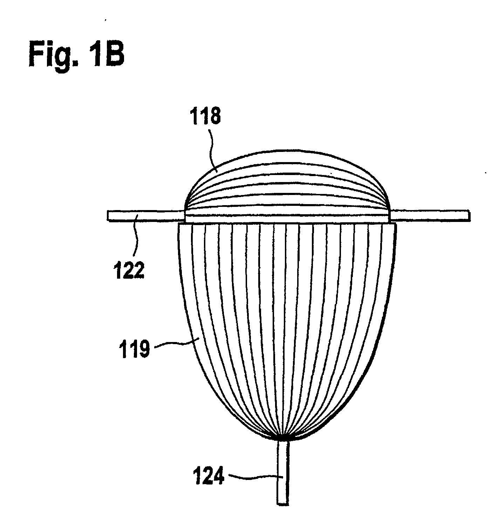

Figur 1 zeigt schematisch eine Bedienvorrichtung 100 mit einem Ausführungsbeispiel eines erfindungsgemäßen Bedienelements 110. Das Bedienelement 110 umfaßt ein erstes und ein zweites Stellelement 112 und 114, wobei das erste und das zweite Stellelement 112 und 114 jeweils um eine zugeordnete Drehachse drehbar sind. Dazu sind das erste Stellelement 112 auf einer ersten Achse 122, das zweite Stellelement 114 auf einer zweiten Achse befestigt, die ihrerseits wiederum in Lagern 126 drehbar gelagert sind. Die Drehachsen der beiden Stellelemente 112 und 114 fallen somit mit den beiden Achsen, auf denen sie angeordnet sind, zusammen.

Die Lager 126 sind beim vorliegenden Ausführungsbeispiel als einfache Gleitlager ausgeführt, können jedoch auch in an sich bekannter Weise in Form von Kugel-, Walzen- oder vergleichbaren Lagern realisiert sein.

Die erste und die zweite Achse 122 und 124, die gleichzeitig auch die Drehachsen des ersten und des zweiten Stellelements 112 und 114 darstellen, stehen bei dem in Figur 1 dargestellten Ausführungsbeispiel exakt oder doch zumindest näherungsweise senkrecht zueinander. Eine davon abweichende Anordnung der mindestens zwei Drehachsen 122 und 124 der mindestens zwei Stellelemente 112 und 114 zueinander ist jedoch grundsätzlich auch möglich.

Bei dem in Figur 1 dargestellten Ausführungsbeispiel ist das erste Stellelement 112 in Form einer Kugel, das zweite Stellelement 114 in Form einer Halbkugel ausgeführt, die das erste Stellelement 112 teilweise umschließt. Auf diese Weise bilden die beiden Stellelemente ein im wesentlichen kugelförmiges Bedienelement 110 mit insgesamt zwei rotatorischen Freiheitsgraden, wobei durch Zuordnung bestimmter Bereiche des Bedienelements 110, in Figur 1 der oberen Halbkugel und der unteren Halbkugel 114, zu verschiedenen Drehachsen bereits eine Benutzerführung gegeben ist.

Die Oberflächen der beiden Stellelemente 112 und 114 sind strukturiert und tragen bei dem in Figur 1 dargestellten Ausführungsbeispiel an ihrer Oberfläche jeweils eine Riffelung 113 und 115. Diese ist beim ersten Stellelement 112 in horizontaler Richtung, beim zweiten Stellelement 114 in vertikaler Richtung ausgerichtet. Diese dient der Vermittlung einer haptischen Information an den Bediener über den möglichen rotatorischen Freiheitsgrad des jeweiligen Stellelements. Darüber hinaus dient die Oberflächenstrukturierung auch der Erhöhung der Griffigkeit des jeweiligen Stellelements 112 bzw. 114.

Gemäß einer vorteilhaften Weiterbildung eines erfindungsgemäßen Bedienelements 110 sind Mittel 150, 160 zur Beeinflussung des zur Drehung mindestens eines der Stellelemente 112 und 114 erforderlichen Drehmoments vorgesehen. Diese sind beim vorliegenden Ausführungsbeispiel in Form von Aktoren ausgeführt, die beispielsweise sowohl ein passives Einrasten eines oder beider Stellelemente 112 und 114 auf mittels der Beeinflussungsmittel 150 und 160 kontextabhängig erzeugten virtuellen Rastmarken, als auch ein aktives Springen eines oder beider Stellelemente 112 und 114 nach Auslenkung aus einer virtuellen Ruhelage in die nächste Ruhelage bewirken können.

Auf den den beiden Stellelementen 112 und 114 zugeordneten Achsen 122 und 124 sind dazu jeweils erste Zahnräder 156 und 166 angeordnet, die wiederum mit weiteren Zahnrädern 154 und 164, die auf Wellen eines ersten und eines zweiten Motors 152 und 162 angeordnet sind, kämmen. Der erste und der zweite Motor 152 und 162 stellen zusammen mit den auf den Achsen 122 und 124 sowie den Motorwellen angeordneten Zahnrädern 154 und 156 bzw. 164 und 166 die Aktoren bzw.

Mittel 150, 160 zur Beeinflussung des zur Drehung der Stellelemente 112 bzw. 114 erforderlichen Drehmoments dar.

Das bisher beschriebene Bedienelement 110 mit seinen beiden Stellelementen 112 und 114 ist Teil einer Bedienvorrichtung 100.

Diese umfaßt neben dem eigentlichen Bedienelement 110 auch eine Auswertung zur Feststellung des Maßes, hier einer Drehung der Stellelemente 112 und 114. Dazu ist dem ersten Stellelement 112 ein erster Wandler 130, dem zweiten Stellelement 114 ein zweiter Wandler 140 zur Feststellung des Maßes und des Drehsinns bzw. der Drehrichtung des jeweiligen Stellelements 112 und 114 und zur Erzeugung jeweils eines das Maß und die Richtung der Drehung anzeigenden Signals zugeordnet.

Die Wandler 130 und 140 des vorliegenden Ausführungsbeispiels umfassen jeweils ein Paar von Photoemittern 135 und 136, die nebeneinander parallel zur jeweiligen Welle 122 und 124 angeordnet sind. Den Photoemittern 135 und 136 gegenüber ist ein Paar von Photodetektoren 137 und 138 derart angeordnet, daß der erste Photoemitter 135 und der erste Photodetektor 137, sowie zweite Photoemitter 136 und der zweite Photodetektor 138 jeweils eine Lichtschranke bilden. Im Zwischenraum zwischen den Photoemittern 135, 136 und den Photodetektoren 137, 138 eines jeden Wandlers 130, 140 befindet sich jeweils eine Codierscheibe 132 bzw. 142, die axial mit der Wellen 122 bzw. 124 gekoppelt ist. Jede Codierscheibe 132, 142 ist mit einer Mehrzahl radial angeordneter Schlitze 133 versehen, so daß ein von einem Photoemitter 135, 136 erzeugter und auf den entsprechenden zugewandten Photodetektor 137, 138 gerichteter Lichtstrahl bei Drehung der entsprechenden Stellelements und damit der entsprechenden Codierscheibe 132, 142 wechselweise durchgelassen oder unterbrochen wird.

Jede Codierscheibe 132, 142 unterbricht jeweils zwei von den Photoemittern 137 und 138 ausgehende Lichtstrahlen. Dabei sind die Abstände der Schlitze 133 in den Codierscheiben 132 und 142 derart in Relation zum Abstand der Photoemitter 137 und 138 bzw. der Photodetektoren 135 und 136 derart ausgebildet, daß dann, wenn der Lichtstrahl des Photoemitters 137 durch einen Schlitz 133 voll durchgelassen wird, der vom Photoemitter 138 ausgehende Lichtstrahl teilweise gesperrt wird.

Die durch eine Drehung einer Codierscheibe 132 bzw. 142 bedingten Unterbrechungen des Lichtstrahls werden von den Photodetektoren 135, 136 erfaßt, die Signale in Form von Impulsen erzeugen.

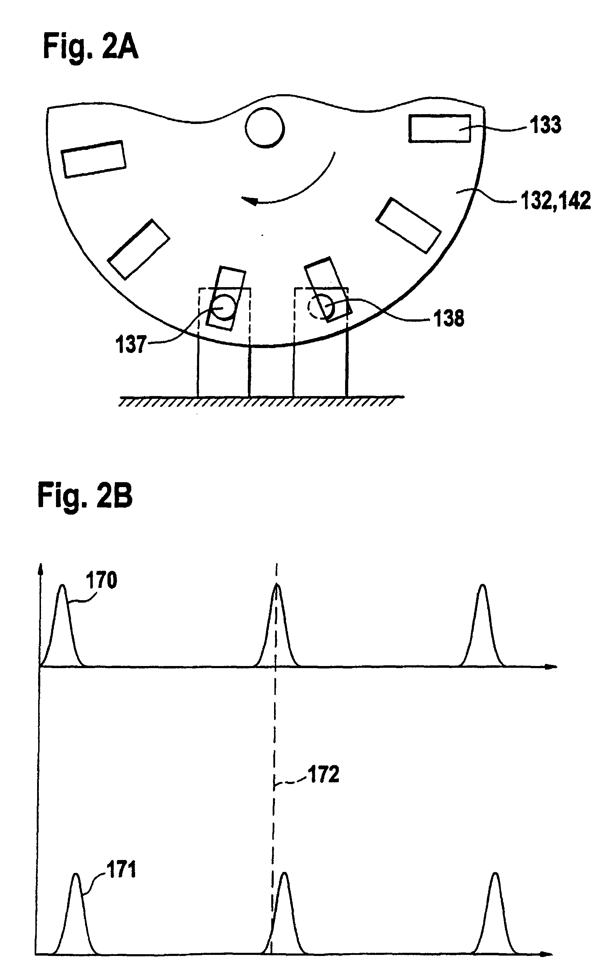

Figur 2B zeigt den zeitlichen Verlauf dieser impulsförmigen Singale. Ein erstes Signal 170 wird vom ersten Photodetektor 135, ein zweites Signal 171 vom zweiten Photodetektor 136 erzeugt. Zum in Figur 2A dargestellten Zeitpunkt 172 weist das erste Signal 170 seine maximale Intensität entsprechend dem vollen Durchlaß des Lichtstrahls des ersten Photoemitters 137 auf, während das zweite Signal 171 hinter dem ersten zurückbleibt, da der Lichtstrahl des zweiten Photoemitters 138 nur teilweise durchgelassen wird. Die Anzahl der Impulse ist ein Maß für die Drehung der betreffenden Codierscheibe 132 bzw. 142, die Reihenfolge bzw. zeitliche Lage der Impulse der beiden Signale 170, 171 zueinander ermöglicht eine Aussage über die Drehrichtung der Codierscheibe 132 bzw. 142 und damit des entsprechend zugeordneten Stellelements 112, 114.

Wesentlich hierbei ist, daß der beschriebene Effekt ausbleibt, wenn die Impulse innerhalb der beiden Signale 170, 171 gleichzeitig oder in gleichen Abständen zueinander auftreten. Eine Richtungserkennung ist dann nicht möglich.

Die Ausgangssignale der Wandler 130 und 140 sind eine Auswerte- und Steuerschaltung 180 zugeführt.

Die Auswerte- und Steuerschaltung 180 umfaßt einen in Figur 1 nicht separat dargestellten Speicher, in dem Drehmomentverläufe abgelegt sind. Diese werden in Abhängigkeit des jeweiligen Kontextes, also einer aktuell aufgerufenen bzw. mittels eines der Stellelemente 112 bzw. 114 durchlaufenen Auswahlliste dem jeweiligen Stellelement zugewiesen.

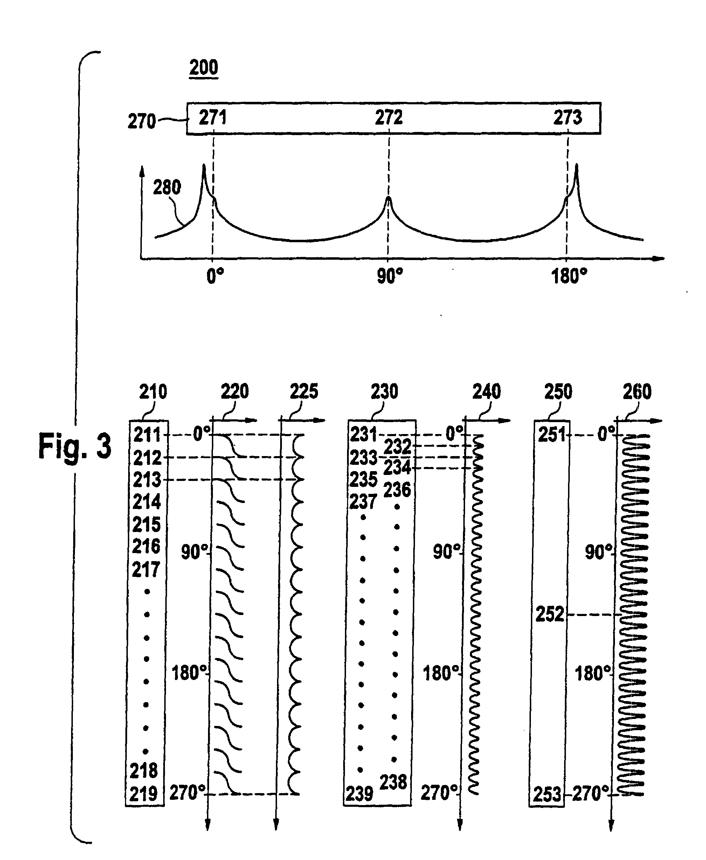

Figur 3 zeigt beispielhaft eine solche Auswahlliste 200, wie sie beispielsweise auch von verbreiteten Computerprogrammen für Büroanwendungen bekannt ist. Diese umfaßt eine horizontal auf einem in Figur 1 nicht dargestellten Anzeigeinstrument dargestellte eindimensionale Auswahlliste 270 mit Inhalten 271, 272 und 273. Die Inhalte dieser Auswahlliste 270 könnten im vorliegenden Beispiel der Figur 3 beispielsweise die Auswahl eines zu empfangenden Rundfunksenders in einem Rundfunkempfänger (271), die Einstellung der Wiedergabelautstärke des Rundfunkempfängers (272) und die Einstellung des Klangs mittels einer aus der Rundfunkempfängertechnik an sich bekannten Klangwaage (273) sein.

Die Auswahl eines der genannten Inhalte 271 bis 273 der Auswahlliste 270 erfolgt durch Drehung des um die in Blattebene senkrecht liegende Drehachse drehbaren zweiten Stellelements 114. Zur Drehung des zweiten Stellelements 114 ist dabei das von der Steuerung 180 zugeordnete mittels des Aktors 160 auf das zweite Stellelement 114 aufgeprägte Drehmoment zu überwinden. Zur Verdeutlichung der sich dabei ergebenden Rasteffekte ist in der Figur der Verlauf 280 des Momentenbetrags aufgetragen. Den auswählbaren Inhalten 271 bis 273 sind Rastpositionen des zweiten Stellelements bei dessen Drehwinkeln 0, 90 und 180 Grad zugeordnet. Um das Stellelement bzw. einen mittels des Stellelements 114 gesteuerten Zeigers innerhalb des Auswahlliste von einem Inhalt 271 bis 273 weg zu bewegen, ist ein vergleichsweise hohes Drehmoment zu überwinden. Ist dieses jedoch überwunden, springt dieses ab einer bestimmten Winkelstellung, beispielsweise bei ca. 45 Grad, automatisch zum nächsten Inhalt 272 der Auswahlliste und rastet dort ein. Dies wird durch den mit dem Bezugszeichen 280 bezeichneten Verlauf versinnbildlicht.

Wird das zweite Stellelement 114 über einen Winkel von 180 bzw. 0 Grad, je nach positiver oder negativer Drehrichtung, hinaus gedreht und damit der zugehörige Zeiger über die Inhalte 273 bzw. 271 hinaus verschoben, steigt das zur Drehung des Stellelements 112 erforderliche Drehmoment auf einen hohen Wert an, wodurch dem Bediener eine haptische Rückmeldung darüber vermittelt wird, daß er sich dem Ende der aktuellen Auswahlliste nähert. Wird das Stellelement 112 dennoch weiterbewegt, kann der Zeiger vom letzten Eintrag 273 der Liste 270 wieder zum ersten Eintrag 271 bzw. vom ersten Eintrag 271 zum letzten Eintrag 273, je nach Drehrichtung des Stellelements 112, springen.

Ist beispielsweise der Punkt 271, also beispielsweise die Auswahl eines Rundfunksenders aus einer gespeicherten Liste von Rundfunksendern, ausgewählt worden, wird auf der Anzeigeeinheit eine weitere, jetzt vertikal angeordnete Auswahlliste 210 mit auswählbaren Rundfunksendern 211, 212, 213, 214, 215, 216, 217, 218 und 219 dargestellt. Rechts daneben ist der Verlauf 220 des zur Drehung des ersten Stellelements 112 zum Durchlaufen der Liste 210 erforderlichen Drehmoments 220 aufgetragen. Dieser zeichnet sich wiederum dadurch aus, daß nach Auslenkung des Stellelements 112 aus einer Rastposition, die beispielsweise einem Sender 213 der Auswahlliste 210 entspricht, das Stellelement 112 und der damit bewegte Zeiger automatisch zum nächsten in der Liste 210 benachbarten Rundfunksender 214 bzw. 212, je nach Drehrichtung, springt und dort einrastet. Der Verlauf 225 des Momentenbetrags veranschaulicht dies nochmals.

Ist der zweite Listenpunkt 272 der Auswahlliste 270, also die Lautstärkeeinstellung, angewählt worden, so wird eine weitere Auswahlliste 230 vertikal auf der Anzeigeeinheit dargestellt, die eine Vielzahl von Lautstärkewerten entsprechenden Werten 231, 232, 233, 234, 235, 236, 237, 238 und 239 beinhaltet. Auch der Lautstärkeeinstellung wird von der Steuerung 180 ein Drehmomentverlauf, dessen Betrag 240 über der Winkelstellung des zweiten Stellelements 114 aufgetragen ist, zugeordnet. Dieser weist einen leicht welligen Verlauf über den dem gesamten Stellbereich 231 bis 239 zugeordneten Winkelbereich 0 bis 270 Grad des Stellelements 114 auf, so daß sich ein leichter Rasteffekt bei Überstreichen des Bereichs ergibt. Dem Bediener wird damit eine haptische Rückmeldung über das Maß der mittels des Bedienelements 110 vorgenommenen Parameterverstellung, hier der Lautstärkeverstellung, vermittelt.

Ist schließlich der dritte Punkt 273 der Liste 270, nämlich die Klangeinstellung ausgewählt worden, so wird wiederum durch die Steuerung 180 eine in vertikaler Richtung ausgedehnte Auswahlliste 250 auf der Anzeigeeinheit dargestellt. Diese erstreckt sich von einem sehr baßlastigen Klang 251 über eine einen ausgewogenen, neutralen Klang repräsentierende Einstellung 252 bis hin zu sehr höhenlastigem Klang 253. Der durch die Steuerung 180 dem ersten Stellelement zugeordnete Verlauf 260 zur Klangverstellung ähnelt dem zu Lautstärkeverstellung, weist jedoch in Bereich der Neutralstellung 252 eine deutlich fühlbare Rastmarke auf.

Vorstehende Ausführungen verdeutlichen, daß eine individuelle Zuordnung eines bestimmten Drehmomentenverlaufs zu einem der beiden Stellelemente 112 oder 114 des Bedienelements 110 in Abhängigkeit eines zu verstellenden Parameters möglich ist. Es ist dabei sowohl die absolute Höhe des zur Drehung eines der Stellelemente erforderlichen Drehmoments, wie die Verteilung von Rastmarken auf den Umfang bzw. eine Umdrehung eines Stellelements in Abhängigkeit des Kontexts vorgebbar. So ist es beispielsweise ebenso möglich, eine Vielzahl von Lautstärkewerten und damit Rastmarken, also eine hohe Auflösung der Lautstärke bei einem breiten Lautstärkeumfang und damit Verstellbereich auf beispielsweise drei Viertel einer Stellelementumdrehung zu verteilen, wie auch beispielsweise die nur drei Einträge 271 bis 273 der Auswahlliste 270 auf eine halbe Umdrehung des zweiten Stellelements 114.

Ebenso ist es aber auch möglich, einem bestimmten zu verstellenden Parameter einen glatten Drehmomentverlauf ohne Rastmarke oder auch ein konstantes Drehmoment zuzuordnen. Auf diese Weise kann beispielsweise einer Lautstärkeverstellung für eine Audioanlage auch eine von einem herkömmlichen Lautstärkepotentiometer gewohnte Haptik zugeordnet werden.

Weiter ist es möglich, die zur Drehung der beiden Stellelemente 112 und 114 des Bedienelements 110 erforderlichen Drehmomente voneinander unabhängig einzustellen. Insbesondere ist es auch möglich, beispielsweise für den Fall, daß nur eine eindimensionale Auswahlliste vorliegt, eines der beiden Stellelemente vollständig zu blockieren und damit dem Bediener eine haptische Rückmeldung darüber zu vermitteln, daß nur eine eindimensionale Auswahlliste vorliegt. So kann beispielsweise im Falle der Liste 270 das erste Stellelement 112 vollständig blockiert werden. Dadurch erhält der Bediener die zusätzliche Information, daß die eindimensional vorliegende Auswahlliste 270 sich offenbar in horizontaler Richtung, nicht aber in vertikaler Richtung erstreckt. Somit ist mittels einer geeigneten Beaufschlagung der Stellelemente 112 und 114 des Bedienelements 110 auch eine haptische Benutzerführung möglich.

Es liegt weiterhin im Rahmen der Erfindung, daß die Stellelemente 112 und 114 des Bedienelements 110 abweichend von der Darstellung in Figur 1 nicht im wesentlichen kugel- bzw. halkugelförmig ausgebildet sind. So können die Stellelemente beispielsweise, wie in Figur 1B dargestellt, auch in Form eines Ellipsoids (erstes Stellelement 118) und eines Halbellipsoids (zweites Stellelement 119) ausgeführt sein.

## Patentansprüche

1. Bedienelement mit einem ersten Stellelement (112, 118), das um eine erste Achse (122) drehbar ist,
mit einem zweiten, um eine Symmetrieachse rotationssymmetrischen Stellelement (114, 119), das um eine zweite Achse (124), die mit der ersten Achse (122) nicht zusammenfällt, drehbar ist,
wobei das zweite Stellelement (114, 119) das erste Stellelement (112, 118) teilweise umfaßt,
**dadurch gekennzeichnet,**
**daß** die erste Achse (122) von einer Stellung des zweiten Stellelements (114, 119) unabhängig ist.

2. Bedienelement nach Anspruch 1, **dadurch gekennzeichnet, daß** die zweite Achse (124) mit der Rotationssymmetrieachse des zweiten Stellelements (114, 119) übereinstimmt.

3. Bedienelement nach Anspruch 1 oder 2, **gekennzeichnet durch** eine im wesentlichen kugelförmige Ausgestaltung, wobei das erste Stellelement (112) im wesentlichen vollkugelförmig, das zweite Stellelement (114) im wesentlichen halbkugelförmig und das erste Stellelement (112) zumindest teilweise umschließend ausgeführt ist.

4. Bedienelement nach einem der vorstehenden Ansprüche, **gekennzeichnet durch** eine im wesentlichen senkrechte Anordnung der ersten (122) und der zweiten Achse (124) zueinander.

5. Bedienelement nach einem der vorstehenden Ansprüche, **gekennzeichnet durch** eine Strukturierung (113, 115) der Oberfläche mindestens eines der Stellelemente (112, 118; 114, 119) zur Verbesserung dessen Griffigkeit und/oder zur Verdeutlichung der möglichen Drehrichtungen.

6. Bedienelement nach einem der vorstehenden Ansprüche, **gekennzeichnet durch** Mittel (150, 160) zur Beeinflussung des zur Drehung mindestens eines der Stellelemente (112, 118; 114, 119) erforderlichen Drehmoments.

7. Bedienelement nach einem der vorstehenden Ansprüche, **gekennzeichnet durch** eine Ausbildung der Mittel (150, 160) zur Beeinflussung des zur Drehung mindestens eines der Stellelemente (112, 118; 114, 119) erforderlichen Drehmoments in Form von Aktoren.

8. Bedienvorrichtung mit einem Bedienelement (110) nach einem der Ansprüche 6 oder 7, **gekennzeichnet durch** eine Steuerung (180), die eine kontextabhängige Beeinflussung des zur Drehung mindestens eines der Stellelemente (112, 118; 114, 119) erforderlichen Drehmoments bewirkt.

9. Bedienvorrichtung nach einem der vorhergehenden Ansprüche, **dadurch gekennzeichnet, daß** die beiden Stellelemente (112, 118; 114, 119) voneinander unabhängig drehbar sind.

## Claims

1. Operator control element having a first actuating element (112, 118) which can be rotated about a first axle (122), having a second actuating element (114, 119) which is rotationally symmetrical about an axis of symmetry and can be rotated about a second axle (124) which does not coincide with the first axle (122), the second actuating element (114, 119) partially enclosing the first actuating element (112, 114), **characterized in that** the first axle (122) is independent of a position of the second actuating element (114, 119).

2. Operator control element according to Claim 1, **characterized in that** the second axle (124) coincides with the axis of rotation of symmetry of the second actuating element (114, 119).

3. Operator control element according to Claim 1 or 2, **characterized by** an essentially spherical configuration, the first actuating element (112) being embodied essentially in the shape of a full sphere, the second actuating element (114) being embodied essentially in the shape of a hemisphere and being embodied so as to at least partially enclose the first actuating element (112).

4. Operator control element according to one of the preceding claims, **characterized by** an essentially perpendicular arrangement of the first axle (122) and the second axle (124) with respect to one another.

5. Operator control element according to one of the preceding claims, **characterized by** structuring (113, 115) of the surface of at least one of the actuating elements (112, 118; 114, 119) in order to improve its grip and/or to make clear the possible senses of rotation.

6. Operator control element according to one of the preceding claims, **characterized by** means (150, 160) for influencing the torque which is necessary to rotate at least one of the actuating elements (112, 118; 114, 119)

7. Operator control element according to one of the preceding claims, **characterized by** the means (150, 160) for influencing the torque necessary to rotate at least one of the actuating elements (112, 118; 114, 119) being embodied in the form of actuators.

8. Operator control device having an operator control element (110) according to one of Claims 6 or 7, **characterized by** a controller (180) which brings about context-dependent influencing of the torque which is necessary to rotate at least one of the actuating elements (112, 118; 114, 119).

9. Operator control element according to one of the preceding claims, **characterized in that** the two actuating elements (112, 118; 114, 119) can be rotated independently of one another.

## Revendications

1. Élément de commande avec un premier élément de réglage (112, 118) qui peut tourner autour d'un premier axe (122), avec un deuxième élément de réglage (114, 119) qui est en symétrie de rotation autour d'un axe de rotation de symétrie et peut tourner autour d'un deuxième axe (124) qui ne coïncide pas avec le premier axe (122), le deuxième élément de réglage (114, 119) entourant partiellement le premier élément de réglage (112, 118),
**caractérisé en ce que**
le premier axe (122) est indépendant d'une position du deuxième élément de réglage (114, 119).

2. Élément de commande selon la revendication 1,
**caractérisé en ce que**
le deuxième axe (124) est en correspondance avec l'axe de symétrie de rotation du deuxième élément de réglage (114, 119).

3. Élément de commande selon la revendication 1 ou 2,
**caractérisé par**
une conformation pour l'essentiel sphérique, le premier élément de réglage (112) étant pour l'essentiel réalisé sous forme de sphère entière, lorsque le deuxième élément de réglage (114) est de forme de demi-sphère et enveloppe au moins partiellement le premier élément de réglage (112).

4. Élément de commande selon l'une des revendications précédentes,
**caractérisé par**
une disposition pratiquement perpendiculaire du premier axe (122) et du deuxième axe (124) l'un par rapport à l'autre.

5. Élément de commande selon l'une des revendications précédentes,
**caractérisé par**
une structuration (113, 115) de la surface au moins d'un élément de réglage (112, 118 ; 114, 119) pour améliorer son adhérence et/ou pour signifier les sens de rotation possibles.

6. Élément de commande selon l'une des revendications précédentes,
**caractérisé par**
des moyens (150, 160) pour influencer le couple de rotation nécessaire pour tourner au moins un des éléments de réglage (112, 118; 114, 119).

7. Élément de commande selon l'une des revendications précédentes,
**caractérisé par**
une formation des moyens (150, 160) pour produire un effet sur le couple de rotation nécessaire pour tourner au moins un des éléments de réglage (112, 118 ; 114, 119) sous forme d'actionneurs.

8. Dispositif de commande ayant un élément de commande (110) selon l'une des revendications 6 ou 7,
**caractérisé par**
une commande (180) qui produit un effet, lié au contexte, sur le couple de rotation nécessaire pour tourner au moins un des éléments de réglage (112, 118; 114, 119).

9. Dispositif de commande ayant un élément de commande selon l'une des revendications précédentes,
**caractérisé en ce que**
les deux éléments de réglage (112, 118 ; 114, 119) peuvent tourner indépendamment l'un de l'autre.
